# EUROPEAN PATENT SPECIFICATION

(11) **EP 2 861 657 B1**
(45) Date of publication and mention of the grant of the patent: **24.10.2018**
(21) Application number: 13729031.8
(22) Date of filing: 14.06.2013
(51) Int. Cl.: C08K 3/04, C08K 7/24, C08J 5/24, B32B 5/28, B32B 5/26, B32B 5/12

(54) **IMPROVEMENTS IN COMPOSITE MATERIALS**
VERBESSERUNGEN AN VERBUNDMATERIALIEN
AMÉLIORATIONS APPORTÉES AUX MATÉRIAUX COMPOSITES

(30) Priority: 14.06.2012 GB 201210602; 14.06.2012 GB 201210601; 01.05.2013 GB 201307898
(43) Date of publication of application: 22.04.2015
(73) Proprietor: Hexcel Composites Limited, Duxford, Cambridgeshire CB22 4QD (GB)
(72) Inventor: SIMMONS, Martin, Baldock Hertfordshire SG7 6NZ (GB); BLAIR, Dana, Duxford Cambridgeshire CB22 4QD (GB); TILBROOK, David, Duxford Cambridgeshire CB22 4QD (GB)
(74) Representative: Pols, Ronald Maarten
(86) International application number: PCT/EP2013/062447
(87) International publication number: WO 2013/186389

(56) References cited:
- WO-A1-2008/056123
- DATABASE WPI Week 201208 Thomson Scientific, London, GB; AN 2012-A93844 XP002714126, -& JP 2012 015273 A (HITACHI CHEM CO LTD) 19 January 2012 (2012-01-19)
- DATABASE WPI Week 198742, Derwent Publications Ltd., London, GB; AN 1987-295531 -& JP S62 207 313 A (ADACHI SHINSANGYO K) 11 September 1987

## Description

The present invention relates to prepregs and composite materials and in particular to increasing the electrical conductivity of fibre reinforced composite materials. Further disclosed are resin formulations useful in the production of the prepregs. Composite materials have well-documented advantages over traditional construction materials, particularly in providing excellent mechanical properties at very low material densities. As a result, the use of such materials is becoming increasingly widespread and their fields of application range from "industrial" to high performance aerospace components including aircraft fuselages.

Prepregs, comprising a fibre arrangement impregnated with resin such as epoxy resin, are widely used in the generation of such composite materials. Typically a number of plies of such prepregs are "laid-up" as desired and the resulting laminate is cured, typically by exposure to elevated temperatures, to produce a cured composite laminate. The term prepreg is used to describe fibres and fabric impregnated with a resin in the uncured or partially cured state and ready for curing. The fibres may be in the form of tows or fabrics and a tow generally comprises a plurality of thin fibres, the fibrous materials may be of carbon fibre, glass or aramid, this invention is particularly concerned with carbon fibre. The chemical composition of the resins employed in the prepregs will depend upon the properties required of the cured fibre reinforced material and also the use to which the cured material is to be put. Prepregs are typically prepared by the deposition of a liquid resin composition onto a moving layer of fibrous material and compressing the liquid resin into the fibrous material whilst, at the same time, forming a layer of the resin on the surface of the fibrous material. The resin composition may be applied to one or both sides of the layer of fibrous material. The term "interlayer" is used herein to describe a resin layer between two fibrous layers.

Composite materials is the term used to describe cured prepregs i.e. where the resin has been cured and composites are often made up from a laminate of a plurality of prepreg layers laid up on top of one another. This results in a laminate structure of fibre arrangements separated by resin interleafs or resin interlayers. The interlayers typically comprise cured epoxy resins which are poor conductors of electricity. Although the fibres particularly carbon fibres have some electrical conductivity, the presence of the interleaf interlayers means that conductivity is exhibited only in the plane of the laminate. The electrical conductivity in the direction orthogonal to the surface of the laminate, the so-called "Z" direction, is low.

This lack of conductivity in the "Z" direction contributes to the vulnerability of composite laminates to electromagnetic hazards such as lightning strikes. A lightning strike can cause damage to the composite material which can be quite extensive, and could be catastrophic if occurring on an aircraft structure in flight. This is therefore a particular problem for aerospace structures, particularly aircraft structures made from such composite materials.

Additionally composites for use in aerospace applications must meet exacting standards on mechanical properties. Thus, any improvements in conductivity must not impact negatively on the required mechanical properties.

A wide range of techniques and methods have been suggested to provide lightning strike protection to such composite materials. There have been many suggestions involving the addition of conductive elements at the expense of increasing the weight of the composite material.

There have been many proposals to use electrically conducting particles including carbon particles to increase the electrical conductivity of fibre reinforced composites. For example, WO2011/027160; WO2011/114140 and WO2010/150022 are all concerned with increasing the electrical conductivity of carbon fibre reinforced composites such as carbon fibre reinforced epoxy resins. They are in particular concerned with increasing the electrical conductivity in the "Z" direction and disclose that conductive particles such as carbon particles may be included in the thermosetting resin to increase the conductivity. Yet further it is suggested that the resin may include particles of thermoplastic materials that are insoluble in the thermosetting resin such as polyamides in order to improve the impact resistance of the composite comprising the cured prepreg. These references also include a thermoplastic resin that is soluble in the thermosetting resin to improve the flow of the resin during processing. Examples of soluble thermoplastic resins that may be used include polyethersulphones and polyamideimides.

It has been suggested that conductive particles may be included in an interleaf resin layer as is described in Russian Patent 2263581 which uses hard fullerite carbon particles in the interleaf layer to provide lightning protection of exposed aircraft parts. WO 2008/056123 and WO2011/027160 also provide conductive particles in the interleaf layers to improve the "Z" direction conductivity. WO2008/056123 employs metallic particles and WO2011/027160 employs hard glassy carbon particles at a level of from 0.3 to 2.0 wt % based on the total resin in the prepreg.

United States Patent 7931958 B2 employs both conductive particles and thermoplastic resin particles in an interleaf layer in a prepreg based composite. The conductive particles are used to increase the "Z" direction conductivity and the thermoplastic resin particles perform the well known function of toughening the cured composite. These known conductive particles are costly and highly specialised materials. They may be particles or fibres having a thermoplastic nucleus coated with a conductive substance or a conductive particle such as a carbon particle such as Bellpearl C-600, C-800, C-2000 derived from phenolic resins or Nicabeads ICB, PC and MC (produced by Nippon Carbon Co Ltd) which are hard carbon particles produced by carbonising and adding a resin surface coating . Also commonly metal or metal-coated conductive particles have been used for this purpose. However, introducing metal into prepregs has been found to be undesirable due to the possibility of corrosion effects, explosion hazards and differences in the coefficient of thermal expansion of the materials.

According to United States Patent 7931958 B2 the total amount of the thermoplastic material and the conductive particles should be 20 wt % or less with respect to the prepreg and the ratio of the weight of thermoplastic particle to the conductive particle is from 1 to 1000. The particles are preferably of a size at most 150 µm preferably from 5 to 30 µm. Where the Examples use carbon particles 0.4 parts of Bellpearl C-2000 are used together with 19.6 parts of an epoxy modified nylon particle in 100 parts of the thermosetting epoxy resin system, a ratio of 49.0 to provide a "Z" direction volume resistivity of 28 x 10³ Ω cm.

An alternative method for increasing the conductivity of composites based on cured prepregs in the "Z" direction is described in PCT publications WO2010/150022 and WO2011/114140 in which the surface of the carbon fibres is disrupted during the prepreg manufacturing process. For example, prior to impregnation with the resin, the fibre tow may be passed over rollers with an abrasive surface. This forms protuberances or broken fibrils at the surface of the fibre tows which will extend into the interleaf interlayer when the resin is applied to the fibres and may contact protuberances formed on the next fibrous layer. This provides to provide an electrically conductive pathway across the interlayer and hence improves electrical conductivity in the "Z" direction.

JP 2012 015273 discloses a heat-conductive sheet containing an organic polymer compound having a glass transition temperature of 0°C or less, epoxy resin, a hardening agent for the epoxy resin, a hardening accelerator and graphite particles and/or hexagonal crystal boron nitride particles having scale shape, elliptic ball shape or rod shape, and six membered ring surface.

JP S62 207313 discloses thermosetting resin moulding materials consisting of a thermosetting resin, an inorganic filler, and globular carbon or graphite.

There remains a need to further increase the electrical conductivity in the "Z" direction of composites derived from prepregs whilst retaining or enhancing the mechanical properties of the composite. According to the invention, there is provided a prepreg, the use of a prepreg, a composite, and the use of a composite as defined in any of the accompanying claims.

We have found that potato shaped graphite (PSG) is particularly useful for increasing the electrical conductivity of fibre reinforced composite, particularly carbon fibre reinforced composite.

The term "potato graphite" will be used herein to describe graphite processed to increase the porosity or spherocity of the graphite. The process may be practiced on natural (e.g., vein graphite) or artificial graphite (e.g., highly crystalline synthetic graphite). Prior to processing, the graphite is commonly scaly (e.g., plate like) or flake graphite having a relatively high degree of crystallinity. The graphite is processed by milling, rolling, grinding, compressing, deforming, etc. the graphite to bend, fold, shape, form, etc. the flakes into a roughly spherical shape. This process may increase the isotropic properties of the graphite over the more anisotropic flake form of the graphite. The potato shaped graphite particles may be coated or uncoated. They may be coated by vapour deposition which typically deposits a highly conductive layer of carbon. The PSG particle can exhibit a planar crystalline structure, whereas the CVD carbon layer is deposited on top of this as an amorphous carbon coating. The Carbon coating can lower the specific resistivity of the PSG. The PSG particles may also be coated by other coating processes known to the art, for example metallisation or sputtering. They may be coated by carbon in any of its forms, or with metals or polymers. The term 'potato shaped graphite' is common to the art as can be seen in the following examples: High-Purity Graphite Powders for High Performance, by Giovanni Juri, Henri-Albert Wilhelm and Jean L'Heureux, Timcal Ltd. Switzerland, 2007 and Graphite: High-tech Supply Sharpens Up, Penny Crossley, industrial Minerals, 2000.

The term "potato shaped graphite" is also used herein to describe graphite having a shape that is typically produced by the process described above (whether produced by such process, by another process or processes, naturally occurring, etc.). "Potato shaped graphite" commonly ranges in shape from the shape of a potato to almost spherical. "Potato shaped graphite" is typically elongated, oblong, etc. and may include graphite having an ellipsoid shape, an ovoid shape, a rectangular shape, an oblate spheroid shape, etc. Both "potato graphite" overall and individual particles of "potato graphite" do not necessarily have a uniform shape and do not necessarily have a symmetrical shape. As used herein, the term "potato shaped graphite" is intended to encompass graphite produced by the process described above, and graphite having the shapes as explained in this paragraph.

Typically PSG have at least one of the following two characteristics: a tap density between 0.3 and 1.5, preferably between 0.5 and 1.4, most preferably between 1 and 1.3 g/cc, when measured according to the method associated with the instrument sold under the name of Logan Instrument Corp. Model Tap-2. They also have a granulometric dispersion measured according to the method associated with the particle analyser sold under the name Microtac Model X100 Particle Analyzer, such that the D90/D10 distribution ratio varies between 2 and 5, and the particles have a size between 1 µm and 50 µm, preferably such that the D90/D10 distribution ratio varies between 2.2 and 4.2 and the particles have a size between 2 µm and 30 µm and or combinations of the aforesaid ranges.

We have found that coated PSG particles as supplied Nippon Power Graphite Company of Japan, having an average particle size of 10 to 20 microns, preferably of 15 microns are particularly suitable for increasing the electrical conductivity of the prepreg. Coated PSG typically has a harder surface than uncoated PSG and a lower specific resitivity, the resistivity can be at least 50% lower than the uncoated PSG. In addition PSG particles from NGS Naturgraphit of Germany are suitable for use in this invention. Other suppliers of spheroidal or near spherical graphite with the properties similar to those described above are also suitable for use in this invention.

The present invention therefore provides a prepreg comprising a fibre reinforced curable resin, the prepreg containing an electrically conductive particle in the range 0.5 to 10% by weight based on the resin, the electrically conductive particle comprising potato shaped graphite.

In a further embodiment the invention provides the use of a prepreg according to the invention for the manufacture of aircraft components.

In a further embodiment the invention provides a composite comprising a fibre reinforced resin, the composite being derived from a prepreg according to the invention.

In a further embodiment the invention provides the use of a composite according to the invention as an aircraft component.

There is also disclosed herein a resin composition useful in the production of such prepregs or composites comprising a curable resin containing potato shaped graphite.

The invention is particularly useful in composite materials comprising resin impregnated fibrous layers separated by an interlayer. Accordingly, there is disclosed herein a composite material comprising at least two layers of carbon fibre reinforced epoxy resin and an interleaf resin layer there between, said interleaf resin layer or interlayer comprising an electrically conductive particle. The electrically conductive particle may comprise potato shaped graphite. Preferably the composite material contains from 0.5 to 10 weight %, preferably from 1 to 8 weight %, more preferably 0.5 to 5 weight %, especially 1.5 to 5 weight % and most preferably from 2 to 4 weight % in relation to the resin of said electrically conductive particle.

Conventionally, in a composite material a resin matrix reinforces the fibrous material by virtue of its presence around the fibrous material or fibrous reinforcement. In the context of this invention, as a result of the structure of the composite material, independent layers of resin in which the fibrous reinforcement is present can be distinguished as fibre reinforced resin layers, and these layers by virtue of their laminate structure form an interlayer or interleave there between.

The thermoplastic particle present in the curable resin disclosed herein may be present in the range of from 5 to 20 weight % in relation to the resin, preferably from 9 to 15 weight % in relation to the resin, and more preferably from 9 to 14 weight % in relation to the resin. In a yet further preferred embodiment the thermoplastic material is a polyamide. Suitable examples of thermoplastic particles include, by way of example, polyamides, polycarbonates, polyacetal, polyphenylene oxide, polyphenylene sulphide, polyacrylates, polyethers, polyesters, polyimides, polyamidoimides, polyether imides, polyurethanes. Polyamides are the preferred type of thermoplastic particles. The polyamide particles may be made from polyamide 6 (caprolactam - PA6), polyamide 12 (laurolactam - PA12), polyamide 11, polyurethane, polymethyl methacrylate, crosslinked polymethyl methacrylate, densified polyethylene sulfone, or any combination thereof. Preferred thermoplastic particles are polyamide particles that have a melting point of between about 140°C and 240°C. The particles should have particle sizes of below 100 microns. It is preferred that the particles range in size from 5 to 60 microns and more preferably from 10 to 30 microns. It is preferred that the average particle size be around 20 microns.

Suitable polyamide particles that may be used are: Orgasol 1002 D NAT1 (PA6), Rilsan PA11 P C20HT (PA11), Ultramid 4350 (PA6T)

The resin or resin formulations used in the present invention preferably comprise curable epoxy resins, curing agents and curing agent accelerators. Cure accelerators may be usually heat activated and are usually included in the resin to shorten the cure cycle time. Typically the formulations are cured by heating to a certain temperature for a certain time. The formulations are developed to possess the desired cure temperature and cure time for the intended application. The reactivity of the formulation is measured as the time required to accomplish a certain degree of cure when held at a certain temperature. The resin systems may also contain a thermoplastic material which is soluble in the epoxy resin such as polyethersulfone to improve the toughness of the resin.

In the production of finished articles including composites the prepregs may be cured and laminated together such as in a stack or they may be laminated to other materials. Typically curing takes place by heating the prepregs in a mould, an autoclave, a press or in a vacuum bag to cure the epoxy resin. The cure cycles employed for curing prepregs and stacks of prepregs are a balance of temperature and time, taking into account the reactivity of the resin and the amount of resin and fibre employed. From an economic point of view, in many applications it is desirable that the cycle time is as short as possible, curing agents and accelerators are usually selected to achieve this.

As well as requiring heat to initiate curing of the resin, the curing reaction itself can be highly exothermic. This needs to be taken into account in the time/temperature curing cycle in particular for the curing of large and thick stacks of prepregs, as is increasingly the case with the production of laminates for industrial application where high temperatures can be generated within the stack due to the exotherm of the resin curing reaction. Excessive temperatures are to be avoided as they can damage the mould or cause some decomposition of the resin. Excessive temperatures can also cause loss of control over the cure of the resin leading to run away cure.

In addition to these problems, there is a desire to produce laminar structures from prepregs in which the cured resin has a high glass transition temperature (Tg), to extend the usefulness of the structures by improving their resistance to exposure at high temperatures, and/or high humidity for extended periods of time which can cause an undesirable lowering of the Tg. Prefereably the Tg is from 150°C to 200 °C, more preferably from 160°C to 200 °C,
Potato shaped graphite (PSG) particles are described in United States Patent Publication 2010/0092808 and have at least one of the following characteristics: a tab density between 0.3 and 1.5 g/cc, a potato like shape, and a granulometric dispersion such that the D90/D10 ratio varies between 2 and 5, and the particles have a size between 1 and 50 µm as measured using a Microtac Model X100 particle analyser. In an embodiment in which disrupted fibres are also in the resin interlayer, the size and shape of the carbon particles is less important as both the fibres and the particles contribute to the increase in conductivity.

Additionally we have found that by use of the disrupted fibres smaller amounts of conductive particles are required to achieve a given electrical conductivity. Potato shaped graphite is a relatively soft material which allows the material to partly disintegrate during resin impregnation and additionally, due to their shape and softness the use of potato shaped graphite particles reduces the tendency of the resin composition to damage the surface of the rollers that are employed in the manufacturing of prepregs. PSG particles that are in a spherical or near spherical shape are preferred as this enables the conductivity to be increased for a minimal concentration of PSG in relation to the resin. It is preferred that the prepreg contain from 0.05 to 4.5 wt % potato shaped graphite, more preferably to 0.1 to 3.0 wt %, and most preferably between 0.25 wt % and 1.5 wt %

One suitable potato shaped graphite (PSG) is the product supplied by NGS Naturgraphit of Germany, called SG25/99.95 SC which has an average particle size of from 10 to 30 microns. Alternatively, PSG supplied by Nippon Power Graphite Company of Japan, called GHDR-15-4 and having an average particle size of from 10 to 30 microns may preferably be used. The GHDR-15-4 comprises a carbon coating deposited by carbon vapour deposition on to its outer surface, Spherical or spheroidal graphite available from other suppliers such as Timrex are also suitable.

In one embodiment the composite of the invention may be formed by curing two or more separate layers of fibrous reinforcement, impregnated with resin with an interleaf layer of resin containing the potato shaped graphite particles therebetween. The layers preferably comprise unidirectional tows, the tows of each layer being substantially parallel. The two layers may be conjoined by compression so that the unidirectional tows are in the same plane. One or more additional fibrous layers may also be combined with the conjoined layers.

The prepregs of the present invention may be prepared by the process described and illustrated in WO2010/150022. This process comprisesi feeding a layer of unidirectional conductive fibres having a defined width, bringing into contact with a first face of the fibres a first layer of resin comprising thermosetting resin containing potato shaped graphite and compressing the resin and fibres together by passing over one or more impregnation rollers. The pressure exerted onto the conductive fibres and resin preferably does not exceed 40 kg per centimetre of the width of the conductive fibres. The resin is preferably provided in sufficient amount for the resin to enter the interstices of the fibres and leave a first outer layer of resin essentially free of unidirectional conductive fibres. This outer layer becomes the interlayer. In particular continuously feeding tows of unidirectional conductive fibres, bringing into contact with a face of the fibres a first layer of resin comprising thermosetting resin, and compressing the resin and fibres together through at least one S-wrap stage whilst providing sufficient resin to both enter the interstices of the fibres and leaving a first outer layer of resin.

Prepregs produced by this process can be manipulated to have a disrupted fibre layer, such that when a plurality of such prepregs are stacked together, producing a prepreg stack comprising a plurality of structural layers separated by resin containing disrupted conductive fibres interleaf layers and containing electrically conductive particles. and are then cured to form a cured composite laminate, much greater conductivity in the "Z" direction is obtained whilst retaining excellent toughness properties.

Alternatively the interleaf prepregs may be produced in a two stage process. The first stage disrupts the surface of the fibre to produce disrupted fibres and brings the fibres into contact with resin which enters the interstices, followed by bringing into contact with another resin comprising conductive particles and optionally toughner particles. This second stage is intended merely to lay down the resin including the particulate materials and in so doing produce a uniform thickness layer of resin free of conductive fibres which becomes an interleaf layer when a plurality of such prepregs are stacked together.

The preferred process to manufacture prepregs of this invention is therefore a continuous process involving the passage of many thousands of fibres through a series of stages, typically guided by rollers. The point where the fibres meet the resin or resin composition of the invention, usually in sheet form, is the start of the impregnation stage. Before the fibres are contacted with the resin and reach the impregnation zone they are typically arranged in a plurality of tows, each tow comprising many thousands of filaments, e.g. 12,000. These tows are mounted on bobbins and are fed initially to a combing unit to ensure even separation of the fibres. It has been found that unusually low fibre tensions just after the bobbin feed position provide further improvement to the disruption of the fibres in the eventual prepreg. Thus, the tension per filament at this position is preferably from 0.0007 to 0.025 g, preferably from 0.01 to 0.015 g.

If disruptive or disrupted fibres are required the fibres may also be passed over roughened surfaces such as abrasive rollers to produce the disruptive or disrupted fibres which become part of the interleaf layer. The fibre processing speed and tension may be controlled to give the desired degree of disruption.

In the process, a second layer of resin comprising thermosetting resin may be brought into contact with the other face of the fibres typically at the same time as the first layer, compressing the first and second layers of resin such that resin enters the interstices of the fibres. Such a process is considered to be a one-stage process because, although each face of the fibres is contacted with one resin layer, all the resin in the eventual prepreg is impregnated in one stage.

Resin impregnation typically involves passing the resin and fibres over rollers, which may be arranged in a variety of ways. Two primary arrangements are the simple "nip" arrangement and the "S-wrap" arrangement.

An S-wrap stage is where the resin and fibres, both in sheet form, pass around two separated rotating rollers in the shape of the letter "S", known as S-wrap rollers. Alternative roller arrangements include the widely used "nip", wherein the fibre and resin are pinched, or nipped, together as they pass between the pinch point between two adjacent or opposing rotating rollers. The pressures induced in the resin and fibres can be controlled to cause the desired degree of disruption of the fibre. Parameters such as separation between rollers, speed, relative speed between rollers and resin and fibres and the contact area of the rollers can be varied to achieve the desired degree of (fibre) disruption and also resin impregnation.

It is understood that S-wrap provides ideal conditions for reliable and reproducible impregnation of the resin between the interstices of the fibres whilst also providing sufficient disruption.

However, nip stages are also possible, provided the pressures are kept low, e.g. by control over the gap between adjacent rollers.

Multiple sets of S-wrap or nip rollers can be used, with each set gradually increasing the pressure applied to the resin. A typical process may also combine sets of S-wrap and Nip rollers in the same production line.

The pressure exerted onto the conductive fibres and resin preferably does not exceed 35 kg per centimetre of width of the conductive fibre layer, more preferably does not exceed 30 kg per centimetre.

Rollers from 200 to 400 mm in diameter, more preferably from 220 to 350 mm, most preferably from 240 to 300 mm, have been found to provide the right conditions for achieving the desired disrupted fibre structures.

For example, when in S-wrap arrangement, two rollers are preferably spaced apart to provide a gap between the centres of them of from 250 to 600 mm, preferably from 280 to 360 mm, most preferably from 300 to 340 mm, e.g. 320 mm.

Two adjacent pairs of S-wrap rollers are preferably separated between the centres of respective rollers of from 200 to 1200 mm, preferably from 300 to 900 mm, most preferably from 700 to 900 mm e.g. 800 mm.

The impregnation rollers may rotate in a variety of ways. They may be freely rotating or driven. If driven, they are conventionally driven so that there is no difference between the speed of rotation and the speed of passage of the resin and fibres over the rollers. Sometimes it may be desirable to apply an increase or decrease of speed of up to 40%, preferably up to 30%, preferably still up to 20%, preferably still up to 30% or most preferably of up to 5% relative to the passage of resin and fibres to promote impregnation or fibre conductivity. Such a difference is referred to in the art as "trim".

Following impregnation of resin into the fibres, often there is a cooling stage and further treatment stages such as laminating, slitting and separating.

There is further disclosed herein a stack of such moulding materials or structures.

The prepregs of the invention may be characterized by its resin content and/or its fibre volume and resin volume and/or its degree of impregnation as measured by the water up take test.

Resin and fibre content of uncured prepregs or composites are determined in accordance with ISO 11667 (method A) for moulding materials or structures which contain fibrous material which does not comprise unidirectional carbon. Resin and fibre content of uncured prepregs or composite which contain unidirectional carbon fibrous material are determined in accordance with DIN EN 2559 A (code A). Resin and fibre content of cured composites which contain carbon fibrous material are determined in accordance with DIN EN 2564 A.

The fibre and resin volume % of a prepreg or composite can be determined from the weight % of fibre and resin by dividing the weight % by the respective density of the resin and carbon fibre.

The % of impregnation of a tow or fibrous material which is impregnated with resin is measured by means of a water pick up test.

The water pick up test is conducted as follows. Six strips of prepreg are cut to a size of 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fibre orientation of the prepreg is extends along the protruding part. A clamp is placed on the opposite end, and 5 mm of the protruding part is immersed in water having a temperature of 23°C, relative air humidity of 50% +/- 35%, and at an ambient temperature of 23°C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Typically, the values for the resin content by weight for the uncured prepreg of the invention are in the ranges of from 15 to 70% by weight of the prepreg, from 18 to 68% by weight of the prepreg, from 20 to 65% by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 32 to 35% by weight of the prepreg, from 35 to 50% by weight of the prepreg and/or combinations of the aforesaid ranges.

Typically, the values for the resin content by volume for the uncured prepreg of the invention are in the ranges of from 15 to 70% by volume of the prepreg, from 18 to 68% by volume of the prepreg, from 20 to 65% by volume of the prepreg, from 25 to 60% by volume of the prepreg, from 25 to 55% by volume of the prepreg, from 25 to 50% by volume of the prepreg, from 25 to 45% by volume of the prepreg, from 25 to 40% by volume of the prepreg, from 25 to 35% by volume of the prepreg, from 25 to 30% by volume of the prepreg, from 30 to 55% by volume of the prepreg, from 35 to 50% by volume of the prepreg and/or combinations of the aforesaid ranges.

Water pick up values for the uncured prepreg moulding material and tows of the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges. In a further embodiment the invention provides a process wherein a layer of unidirectional fibrous tows which are fully impregnated with liquid resin are superimposed on a layer of dry unimpregnated unidirectional fibrous tows and the structure consolidated so that the resin penetrates the spaces between the unimpregnated tows but leaves the spaces between the filaments within the tows at least partially unimpregnated. A supporting web or scrim may be provided on one or both sides of the structure preferably before consolidation.

In a preferred embodiment the interior of the tows is at least partially resin free to provide an air venting path or structure, so that air that may be present in the tows from the outset or that may be introduced during impregnation with the liquid resin is not trapped within the structure by the resin and can escape during preparation and consolidation of the prepreg. The air is able to escape along the length of the tows and also from the second side of the fibrous layer if the impregnation by the resin is such that some or all of the surface of the second side of the fibrous layer is not carrying resin. Furthermore, the provision of the spaces between the filaments of the tows will allow air trapped between the prepregs during stack formation to escape particularly if, in addition, one side of the prepreg is not entirely coated with resin.

The prepregs of this invention may be produced from normally available epoxy resins which may contain a hardener or curing agent and optionally an accelerator. In a preferred embodiment the epoxy resin is free of a traditional hardener such as dicyandiamide and in particular we have found that desirable prepregs can be obtained by use of hardener such as anhydrides, particularly polycarboxylic anhydrides; amines, particularly aromatic amines e.g. 1,3-diaminobenzene, 4,4'-diaminodiphenylmethane, and particularly the sulphones and methylene bisanilines, e.g. 4,4'-diaminodiphenyl sulphone (4,4' DDS), and 3,3'-diaminodiphenyl sulphone (3,3' DDS), 4,4'-methylenebis (2-methyl-6-isopropylaniline) (M-MIPA), 4,4'-methylenebis (3-chloro-2,6-diethylene aniline) (M-CDEA), 4,4'-methylenebis (2,6 diethyleneaniline) (M-DEA) and the phenol-formaldehyde resins, and/or combinations of the aforesaid curing agents. Preferred curing agents are the methylene bisanilines and the amino sulphones, particularly 4,4' DDS and 3,3' DDS. The relative amount of the curing agent and the epoxy resin that should be used will depend upon the reactivity of the resin, the desired shelf life, desired processing properties and the nature and quantity of the fibrous reinforcement in the prepreg.

In order to produce composites with substantially uniform mechanical properties it is important that the structural fibres and the epoxy resin be mixed to provide a substantially homogenous prepreg. The preferred prepregs of this invention contain a low level of voids between the tows. It is therefore preferred that each prepreg and the prepreg stack has a water pick-up value of less than 6% or less than 2%, more preferably less than 1%, most preferably less than 0.5%. The water pick-up test determines the degree of waterproofing or impregnation between the unidirectional tows of the prepregs of this invention. In this test, a specimen of prepreg material is initially weighed and clamped between two plates in such a way that a strip 5 mm wide protrudes. This arrangement is suspended in the direction of the fibres in a water bath at room temperature (21°C) for 5 minutes. The specimen is then removed from the plates and weighed again and the difference in weight provides a value for the degree of impregnation within the specimen. The smaller the amount of water picked up, the higher the degree of waterproofing or impregnation.

The prepregs of this invention are intended to be laid-up with other composite materials (e.g. other prepregs which may also be according to this invention or they may be other prepregs) to produce a curable laminate or a prepreg stack. The prepreg is typically produced as a roll of prepreg and in view of the tacky nature of such materials, a backing sheet is generally provided to enable the roll to be unfurled at the point of use. Thus, preferably the prepreg according to the invention may comprise a backing sheet on an external face to facilitate handling of the material and/or rolling up of the material. The backing sheet may comprise a polyolefin based material such as polyethylene, polypropylene and/or copolymers thereof. The backing sheet may comprise embossing. This has the advantage of providing the prepreg with an air venting surface structure. The air venting surface structure comprising embossed channels which allow air to escape during processing. This is particularly useful as this prevents interply entrapment as interply air is effectively removed via the air venting surface channels.

A preferred use of the prepregs of the present invention is as a tape; the prepregs can be prepared as a roll of material prepared specifically for an automatic tape lay-up device. The prepregs are provided with backing sheets which are removed when they are laid up in the mould. Thus, the prepreg typically provided with a backing sheet is preferably sufficiently flexible so as to be able to form a roll with a diameter of less than 20 cm, preferably less than 10 cm. Known automatic lay-up apparatus requires the roll to satisfy particular dimensions. For example, the roll is either wound onto a 254 mm or 295 mm inside diameter core within a tolerance of ±0.5 mm. As such, the composite material is preferably not so thick that it cannot easily be rolled. Thus typically the composite material has a thickness of from 0.5 to 5.0 mm, preferably from 0.5 to 4.0, most preferably from 1.0 to 3.0 mm. The roll can be cut to standard prepreg tape sizes which include 600 mm (24"), 300 mm (12"), 150 mm (6"), 75 mm (3"), 50 mm (2"), 25 mm (1"), 6.34 mm (1/4 ") and 3.18 mm (1/8") in width, and cut within a tolerance of ±0.050 mm and then laid-up as several layers of tape and cured. Tapes are frequently used in this way in the production of aircraft components.

The prepregs of this invention are produced by impregnating the fibrous material with the epoxy resin composition as previously described. The viscosity of the resin composition and the conditions employed for impregnation are selected to enable the desired degree of impregnation. It is preferred that during impregnation the resin containing the conductive particles and optionally the thermoplastic toughening particles has a viscosity of from 0.1 Pa.s to 100 Pa.s, preferably from 6 to 100 Pa.s, more preferably from 18 to 80 Pa.s and even more preferably from 20 to 50 Pa.s. In order to increase the rate of impregnation, the process may be carried out at an elevated temperature so that the viscosity of the resin is reduced. However it must not be so hot for a sufficient length of time that premature curing of the resin occurs. Thus, the impregnation process is preferably carried out at temperatures in the range of from 40°C to 110°C more preferably 60°C to 80°C. It is preferred that the resin content of the prepregs is such that after curing the structure contains from 30 to 40 wt %, preferably 31 to 37 wt % more preferably 32 to 35 wt % of the resin. The relative amount of resin and multifilament tow, the impregnation line speed the viscosity of the resin and the density of the multifilament tows should be correlated to achieve the desired degree of impregnation between the tows and to provide the interleaf layer of resin that is essentially free of the fibres providing the reinforcement.

The epoxy resin used in the resin compositions disclosed herein and/or in the preparation of the prepregs of the invention preferably has an Epoxy Equivalent Weight (EEW) in the range from 10 to 1500, preferably it has an EEW in the range of from 50 to 500. Preferably the resin composition comprises the epoxy resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the trade names MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the trade name ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), MY722 (from Huntsman Advanced Materials), and Araldite ECN 1299 (from Huntsman Advanced Materials).

The aforesaid hardeners may be present in relation to the resin system, such that the resin contains hardener in the range of from 10 to 25 weight % in relation to the resin, preferably from 10 to 20 weight %, and more preferably from 15 to 20 weight % in relation to the resin.

In a preferred embodiment, the resin may comprise a combination of one or more of the following components: a base resin component in the form of a tri-glycidyl aminophenol in the range of from 8 to 34% by weight of the resin, a further base resin component in the form of a bis-phenol epoxy in the range of from 20 to 28% by weight of the resin, a further base resin component in the form of a tetra-glycidyl amine in the range of from 25 to 35% by weight of the resin, a toughner in the form of a polyethersulphone in the range of from 10 to 25% by weight of the resin, a curative in the form of methyl anhydride (NMA) or diaminodiphenylsulfone in the range of from 2 to 28% by weight of the resin. The resin may further comprise a polyamide as herein described in the range of from 10 to 15% by weight of the resin.

Where disruptive or disrupted fibres are employed in this invention they may be derived from the reinforcing fibres and particularly carbon filament tows and they provide conductive filaments located at the surface of the carbon fibre layer. These filaments extend into the resin interlayer so that when cured under elevated temperature, a cured composite material is produced comprising a cured structural layer of packed conductive fibres and an interlayer of cured resin, the interlayer of cured resin, comprising the disruptive fibres dispersed therein together with the electroconductive particles.

The disruptive fibres are believed to form electrical contacts between themselves and also with the conductive particles and thus providing electrical conductivity across the interlayer so increasing the electrical conductivity in the "Z" direction of the cured composite material. If two such prepregs are laid together, the first outer layer of resin of one prepreg, and if present an outer layer of resin of the other prepreg, form a resin interleaf layer between two layers of electrically conductive fibres.

The conductive disrupted filaments may be prepared by manipulation of an outer face of the structural layer of conductive fibres to generate fibres by disrupting a proportion of the reinforcing fibres.

Thus, there is disclosed herein a process for producing a prepreg, the process comprising passing a sheet of electrically conductive fibres to a fibre disrupting means. This causes a proportion of the fibres or fibrils on an external face of the sheet to
become disrupted filaments. The fibres are subsequently impregnated with the thermosetting resin disclosed herein, thus generating an outer layer of resin in contact with the external face of the sheet comprising the structural fibres which also comprises the disrupted filaments, and wherein the thermosetting resin additionally contains electrically conductive particles.

The electrically conductive particles preferably have a size whereby at least 50% of the particles present in the resin have a size within 20 µm or 10 µm or 5 µm of the thickness of the resin interleaf layer. In other words the difference between the thickness of the resin interleaf layer and the size of the electrically conductive particles is less than 10 µm. Preferably the electrically conductive particles have a size whereby at least 50% of the particles present in the resin have a size within 5 µm of the thickness of the resin layer. The resin interleaf layer can be measured by microscopy analysis and is well known in the art. The size of at least 50% of the electrically conductive particles is therefore such that they bridge across the interleaf thickness and the particles are in contact with an upper fibrous reinforcement ply and a lower fibrous reinforcement ply arranged about the resin layer.

The disrupting means manipulates the fibres at an external face to become filaments which may be free filaments or may remain attached to the base carbon fibre. The term "free filaments" means filaments which are not physically or chemically bound to any other body and are essentially mobile. Free filaments thus formed are not adhered to any other fibres and are freely mobile.

For example, the free fibres typically have a distribution of lengths with a mean length of less than 2.0 cm, preferably less than 1.0 cm, more preferably less than 0.5 cm.

The disruption means may generate the disrupted filaments in a number of ways depending on how the structural fibres are arranged, for example by breaking points of adhesion between structural fibres and breaking structural fibres into shorter lengths, or by forming loop, or individual breaks which permit free ends of filaments to migrate into the interlayer.

In a preferred embodiment, the conductive fibres are unidirectional fibres and the disruption means involves passing the fibres over an abrasion surface, thereby causing breakage of a proportion of the fibres on the external face
passing in contact with the abrasion surface, whilst the fibres not in contact with the abrasion surface remain unbroken.

It has been found that breaking from 0.5 to 5.0 wt % of the fibres in at least one location provides good results.

As discussed above, unidirectional fibre sheets are typically formed from a plurality of tows of fibres, which are spread out to merge together, prior to impregnation with resin. A common method of achieving this is to pass the fibres over a plurality of sequential spreader bars or rollers.

It is therefore convenient for the abrasion surface to be incorporated in an existing spreader bar arrangement. Thus, in a preferred embodiment, the abrasion surface is the surface of a spreader bar.

Furthermore, it has been found that if the abrasion surface spreader bar is positioned late in the sequence of spreader bars, then further improvements in conductivity can be obtained. Thus, preferably the abrasion surface spreader bar is in the last three, preferably in the last two, and most preferably is the last spreader bar in a spreader bar sequence.

The abrasion surface may be made from any suitable material, such as metal or ceramic, however tungsten carbide is preferred.

In a preferred embodiment, the process involves passing the sheet of electrically conductive fibres to a second fibre disrupting means to cause a proportion of the fibres on the other external face of the sheet to become free fibres.

Thus, at least two spreader bars may comprise abrasion surfaces, each one in contact with each of the external faces of the sheet of conductive fibres.

However, it has been found that the roughness of the abrasive surface is a key parameter and thus preferably the abrasive surface has a Ra roughness of at least 1.5 micrometres, more preferably at least 2.5 micrometres.

Another important factor is the relative speed of movement of the fibres over the surface. Preferably the relative speed of movement is from 2 to 20 m/min.

Once the sheet of electrically conductive fibres comprising free fibres on one or both external faces is prepared, the next stage is resin impregnation as previously described.

The good mechanical properties are generally attributed to the presence of interlayers which are free of structural fibres, and contain toughening materials such as thermoplastic particles that are insoluble in the resin. However, these traditional interlayers contribute to the poor "Z" direction electrical conductivity because they provide a spacing between adjacent layers of conductive fibres. The present invention overcomes this problem without affecting the good mechanical performance provided by the interlayer by providing the disruptive fibres and providing electrically conductive particles in the resin. Thus the invention is equally applicable if the impregnation process is a one-stage or two-stage process.

Where an additional toughening particulate material is included in the resin composition disclosed herein the additional toughening material can be of a wide variety of materials.

Where the additional toughening material is a polymer it should be insoluble in the matrix resin, typically an epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), and polyetherimide (PEI). Polyamides such as nylon 6 (PA6) and nylon 12 (PA12) and nylon 11 (PA11) and/or mixtures thereof are preferred.

The reinforcing fibres may be synthetic or natural fibres or any other form of material or combination of materials that, combined with the resin composition disclosed herein, forms a composite product. The reinforcement web can either be provided via spools of fibre that are unwound or from a roll of textile. Exemplary fibres include glass, carbon, graphite, boron, ceramic and aramid. Preferred fibres are carbon and glass fibres particularly carbon fibres. Hybrid or mixed fibre systems may also be envisaged. The use of cracked (i.e. stretch-broken) or selectively discontinuous fibres may be advantageous to facilitate lay-up of the product according to the invention and improve its capability of being shaped. Although a unidirectional fibre alignment is preferable, other forms may also be used. Typical textile forms include simple textile fabrics, knit fabrics, twill fabrics and satin weaves. It is also possible to envisage using non-woven or non-crimped fibre layers. The surface mass of fibre filaments within the fibrous reinforcement is generally 80 to 4000 g/m², preferably 100 to
2500 g/m², and especially preferably 150 to 2000 g/m². The filaments are arranged in tows. The number of carbon filaments per tow can vary from 3000 to 320,000, again preferably from 6,000 to 160,000 and most preferably from 12,000 to 48,000. For fibreglass reinforcements, fibres of 600 to 2400 tex are particularly adapted. Carbon fibre is preferred if the prepregs and composites are used in aerospace components.

The tows may be spread to form light weight reinforcement material, typically having a weight in the range of from 10 to 200 g/m² (gsm), preferably of from 15 to 150 g/m², more preferably from 20 to 100 g/m² or from 30 to 80 g/m² and/or combinations of the aforesaid ranges. One or more resin layers may be reinforced by containing this light weight fabric. The light weight reinforcement may comprise carbon reinforcement. Other resin layers may contain carbon reinforcement of a heavier area weight as hereinbefore described.

Advantageously, the carbon fibre reinforcement may be in the form of a spread fabric or flat fibre tow fabric such as the fabric as disclosed in WO 98/46817. Examples of such spread fabric are 268 gsm, 194 gsm, 134 gsm and 75 gsm as derived from T700 carbon fibre as supplied by Toray. Alternatively, commercial fabrics such as multiaxial non-crimp fabrics (NCF) C-Ply 268 gsm (2 x 134 gsm, 0+/- 45), C-Ply 150 (2 x 75) 0/20/0/25 derived from the same T700 fibres as supplied by Chomarat; or Textreme 160 (2 x 80 gsm plies 0/90), or Textreme 160 (2 x 80 gsm plies 0/90) derived from the same T700 fibres as supplied by Oxeon SE.

Spread tow fabrics and tapes can be produced using HS (high strength), IM (intermediate modulus) and HM (high modulus) carbon fibres as well as other types of high performance fibres. Spread tow carbon unidirectional materials may be available in the following fibre types and weights: Intermediate modulus carbon > 21 gsm, high strength carbon > 40 gsm, high modulus carbon > 65 gsm, heavy tow (> 48k filaments) > 100 gsm.

Spread tow carbon fabrics may be available in the following fibre types and weights. For high strength carbon fabrics: (from 12k filaments) 80 gsm, 160 gsm and 240 gsm, (from 15k filaments) 100 gsm, (from 24k filaments) 160 gsm and 320 gsm and for heavy tows 200 gsm and more. For intermediate modulus carbon fabrics: (from 12k filaments) 43 gsm, (from 18k filaments) 76 and 152 gsm, (from 24k filaments) 82 gsm and 164 gsm. For high modulus carbon fabrics: from 12k - 130 gsm. The fibre angles may range from unidirection to 0/90 and 45/45 fabrics. Alternative angles may also be used such as +45/-45, +30/-60, +50/-25, etc.

The interleave or interlayer which may be formed by combining carbon reinforced resin layers whereby the carbon reinforcement is of a light weight, may differ from the interleave of resin layers containing a heavier carbon fibre reinforcement.

The interleave may have a thickness in the range of from 10 to 45 µm, preferably from 15 to 35 µm.

Particles which may be present in the interleave may have a size in the range of from 15 to 30 µm, preferably from 15 to 25 µm. The particles may comprise toughners, electrically conductive particles and/or combinations of the aforesaid particles.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weigh 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Once prepared, the prepreg or prepreg stack may be cured by exposure to an elevated temperature, and optionally elevated pressure, to produce a cured composite laminate. As discussed above, the prepregs of the present invention can provide excellent mechanical properties without requiring the high pressures encountered in an autoclave process.

Thus, in further aspect, there is disclosed herein a process of curing the thermosetting resin within a prepreg or prepreg stack, the process involving exposing the prepreg or prepreg stack to a temperature sufficient to induce curing of the thermosetting
resin composition and is preferably carried out at a pressure of less than 10 or 7 or 3.0 bar absolute.

The curing process may be carried out at a pressure of less than 10 or 7 or 3.0 or 2.0 bar absolute, preferably less than 1 bar absolute. In a particularly preferred embodiment the pressure is less than atmospheric pressure. The curing process may be carried out at one or more temperatures in the range of from 150 to 260°C, preferably from 180 to 220 °C, more preferably from 160 to 210°C for a time sufficient to cure the thermosetting resin composition to the desired degree.

Curing at a pressure close to atmospheric pressure can be achieved by the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied. The vacuum bag techniques can also be applied within an autoclave.

Once cured, the prepreg or prepreg stack becomes a composite laminate, suitable for use in a structural application, for example an aerospace structure.

Such composite laminates can comprise structural fibres at a level of from 45% to 75% by volume (fibre volume fraction), preferably from 55% to 70% by volume, more preferably from 60% to 68% by volume (DIN EN 2564 A).

The laminates produced from the prepregs of this invention preferably contain less than 1% by volume of voids, or less than 0.7% by volume of voids, typically less than 0.1% by volume and particularly less than 0.05% by volume based on the total volume of the laminate as measured by microscopic analysis of 20 spaced cross sections measuring 30 x 40 mm in cross section (spacing 5 cm) of a cured sample of the laminate.

The unique properties of the lightweight layers used in this invention make it possible to cure the laminates using such layers in an out-of-autoclave process. This relatively low pressure and low cost curing process can be used because the damage tolerance (e.g. Compression After Impact - CAI) of the cured laminate is not substantially less than the damage tolerance achieved using the higher pressure and higher expense of an autoclave. In contrast, out-of-autoclave curing of laminates that have interleaf zones toughened with insoluble thermoplastic particles produces cured laminates that have damage tolerances that are significantly reduced.

Within this application the electrical conductivity of composite laminates in the "Z" direction is measured by the following method.

A panel is prepared from multiple unidirectional prepreg layers so that the fibre orientations of subsequent layers in 0/90. The panel is cured by autoclave cure at a temperature of 180°C for 2 hours under a pressure of 0.7 MPa to form a cured panel of 300 mm x 300 mm x 3mm in size. Specimens (four) for test are then cut from the panel so that these are sized as 40 mm x 40 mm x 3 mm. The square faces of the specimens are sanded on a Linisher machine to expose the carbon fibres. Excess sanding is prevented as this would penetrate past the first ply into the first intralaminar layer. The square faces are then coated with a metal such as gold via thermal sputtering to a thickness of approximately 30 nm or tin-zinc to a thickness of at least 10 micrometers via arc-spraying. Any metal on the sides of the specimens is removed by sanding prior to testing.

Each side of the specimens is contacted with a copper braid or wire to form electrodes which extend diagonally across the metal plated surfaces. A power source (TTz EL302P programmable 30V/2A power supply unit, Thurlby Thandar Instruments, Cambridge, UK) which is capable of varying both voltage and current is used to determine the resistance. Two or four electrodes can be used per sample, the latter is preferred as it is more reproducible. The power source is contacted with the electrodes and held in place using a clamp. The clamp has a non-conductive coating or layer to prevent an electrical path from one braid to the other. A current of one ampere is applied and the voltage noted. Using Ohm's Law resistance can then be calculated (R=V/I). The test is carried out on each of the cut specimens to give range of values. To ensure confidence in the test each specimen is tested two times. To verify the measurement, the resistivity is also measured using a Flux Multimeter by placing one electrode on one plated surface and the other electrode on the opposite plated surface.

From the calculated resistance [Ohm], the conductivity [Siemens] is calculated as Conductivity (σ) = thickness of specimen (t)/resistance (R) x area of specimen (A) The cross ply conductivity is calculated by dividing the conductivity value by the thickness of the laminate (3 mm), so through thickness conductivity = σ /thickness.

Figure 1 is a schematic representation of a process which may be used to manufacture prepregs of the present invention.

Figure 2 is a schematic representation of another process which may be used to manufacture prepregs of the present invention.

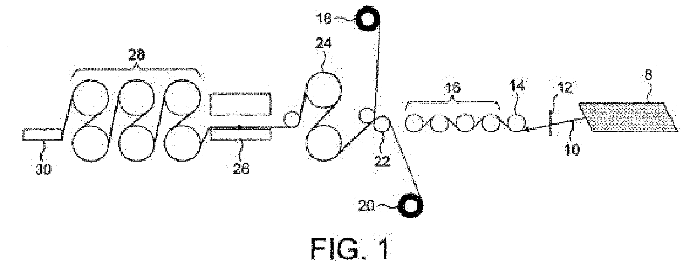

Turning to Figure 1, the process proceeds from right to left beginning with a creel unit 8 which can support 370 spools of carbon fibre tows, each tow having 12,000 individual carbon filaments. Each fibre bobbin on the creel is tensioned by a strap and spring arrangement to provide a uniform tow to tow fibre tension to the machine. The tows of fibre pass from the creel to a comb. Before they enter the comb a measurement of individual tow tension is taken at location 10 in Figure 1. Individual 12k carbon fibre tow tensions are measured here with a hand held fibre tensiometer. Fibre break load on the creel from the strap and spring assembly is controlled to provide a fibre tension at this point of around 160 g/tow.

A random selection of ten tows from each of the process webs is measured for quality control and checking the nominal fibre tow tension is at the preferred individual tow tension of 160 g/tow. The fibre tows then pass through a comb 12. The fibre comb acts to separate the carbon fibre tows and align them into the fibre spreading bar section and control the overall fibre web width so that prepreg fibre areal weight is within required tolerances. The fibre tows then pass onto a load cell roller 14 which measures the global overall applied tension to the carbon fibres. The fibres then pass through spreader bars 16. These bars control fibre tensioning and spreading to control the final fibre tension and alignment of fibres before they make contact with the resin coated films at the pinch point 22.

The two bars forming pinch point 22 are locked so they do not rotate, other bars before this do rotate. The first spreader bar 16 is a load cell roller to monitor overall global fibre tension incoming to the spreader bar system. The fibre tows are heated in this spreader bar section by an infrared heater (not shown) in preparation for impregnation by the resin composition disclosed herein. The infrared heater softens the fibre sizing in order to help promote good fibre impregnation. The fibre sizing is an epoxy solution that is applied to the carbon fibre at point of manufacture to aid fibre handling but in some instances the sizing can restrict fibre spreading and impregnation.

The two pre-coated resin film rolls are loaded to the prepreg machine unwinds, one above the prepreg web 18 and one below the prepreg web 20. These film rolls provide resin that is fed by top film unwind 18 and bottom film unwind 20. The resin and fibres meet at pinch point 22. No significant impregnation occurs at this point.

Pre-coated resin films are at nominally 69 gsm for this 268 fibre areal weight product so that 34% resin content by weight is achieved in the final product. The resin is coated onto the right side of a super calendared double sided differential value silicone release coated paper. Film roll braking tensions at unwinds 18 and 20 are controlled and matched with the final fibre web tension in order to run a crease free prepreg web through the hot S-wrap impregnation zone 24, 28.

The resin and fibres then pass through the first S-wrap compactor 24 and then through another infrared heating stage 26 for further heating. The prepreg is heated under the IR heater to 120 to 130°C so that resin viscosity is reduced before the web enters the 2^{nd}, 3^{rd} and 4^{th} heated S-wrap roll sets, as shown in Figure 1, for resin impregnation into the structural fibrous layer of 12k carbon fibre tows. At this stage of the process, after the IR heater 26, the resin has a low enough viscosity for impregnation into the fibres.

The resin and fibres pass through three more S-wrap compactors 28 where the impregnation occurs to produce disrupted fibre layers with reliable and sufficient impregnation. These S-wrap roller sets are heated to 135 to 140°C, are 270 mm diameter and are separated to form a gap between them of 350 to 450 mm.

The rotational speed on these rollers are controlled so that web wrapping forces are high in order for these forces to act on the prepreg web for disruption of the structural fibre layer and cause high resin flow into the carbon fibres for good impregnation to be achieved. The disruption of the structural fibre layer by the S-wrap wrapping forces has been found to be required for low resistance values and impregnation is needed for success in the automated prepreg tape laying operation in customer processes.

The fibre and resin then passes over a chilled plate 30. The prepreg web is chilled on this chill plate to cool the prepreg to 20 to 22°C so that a process paper can be removed prior to further conventional processing prepreg processing stages that follow the chill plate and which are not shown here but are known to the skilled person.

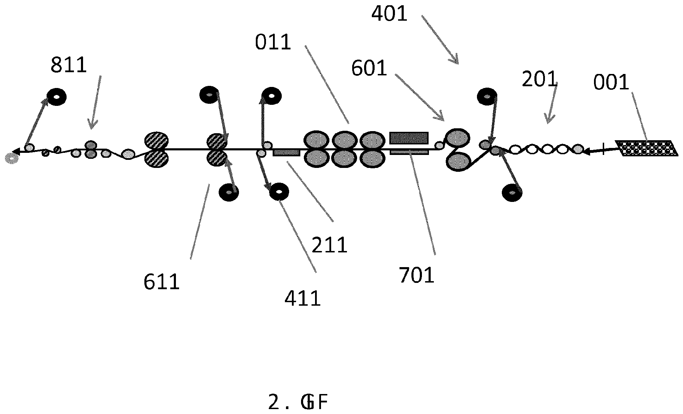

We shall discuss the process of Figure 2 (Process 2) in relation to the below Examples.

### Examples

In the following examples prepregs were prepared using two different processes illustrated in Figures 1 and 2 corresponding to Process 1 and Process 2 respectively. Common to both processes the fibre tows are supplied from a creel 100 (or 8 of figure 1) which contains multiple spools holding the fibre tows. Each fibre tow contains multiple carbon fibre filaments (12000 filaments) which each have a diameter of about 5 microns. The tows are spread out by conducting the tows over spreader bars. The spreader bars are cylindrical bars which have a smooth surface (surface roughness of less than 0.1 micron). The tension in the fibres, and the path of the fibre tows over the bars causes the fibre tows to flatten and thus spread. Spreader bars are widely used to flatten and spread fibre tows.

Following the spreader bars, the fibres were impregnated on both sides by resin films 104 (or 18 and 22 of Figure 1). The resin films contained thermoplastic particles (PA 6 or PA 11) and the resins of the Examples of the invention also contained conductive particles. The first stage of impregnation is common to both processes, whereby the fibres and resin were run over an S shaped compactor (S wrap) 106 (or 24 of Figure 1) and through an infrared heating chamber 107 (or 26 of figure 1). The heating of the resin encouraged the resin to flow into the fibres.. The remaining steps of impregnation was performed by either of the methods depicted in Figure 1 or 2.

Figure 2, referred to herein as Process 2, passed the resin and fibres through 3 nip rollers (3 N) 110, which compacted and further compressed the resin into the fibres. Figure 1, referred to herein as Process 1, passed the resin and fibres through 3 further S-wraps (28) which compacted and further compressed the resin into the fibres. The impregnated fibres were then chilled by a chill plate 112 (or 30 of figure 1).

Following this step, backing papers were rewound 114 and the prepreg was backed with polythene backing 116 (not shown on figure 1)

The products of the invention contain conductive particles in combination with the thermoplastic particles. A product is a prepreg containing an uncured thermosetting resin and a carbon fibre of the areal weight 268 g/m². The thermosetting resin contains a blend of trifunctional epoxy resin (from Huntsman), bisphenol-F epoxy, and 4,4¹DDS curative. The resin contains a thermoplastic additive in the form of polyethersulphone (PES), which is dissolved in the thermosetting resin. In addition the product contains thermoplastic particles in the form of polyamide such as PA 6 (nylon 6) or PA 11 (nylon 11) in a concentration of 9.5 to 13.5 weight % based on the resin. The volume average diameter of the thermoplastic particles is 20 microns as determined by Coulter measurement (laser diffraction analysis).

The Examples compare the "Z" direction conductivity and mechanical performance in systems in which the fibres are smooth or disrupted and "disruption" in the fibre beds on either side of the resin layer, may be inferred from microphotographs. The interlayers are formed when prepregs plies are stacked up together. The conductive fibre elements appear to include broken fibre filaments and/or fibre filaments which have been displaced as a result of the force exerted during impregnation of the fibre tows with resin.

The lay up of the prepregs is a 0/90 configuration.

The resistance and conductivity in the Examples were determined as follows.

### Conductivity of composite laminates test method

The conductivity is measured by coating samples with a metal and attaching electrodes to the sample. We have found that the values obtained vary according to the metal used and the thickness of the metal coating and accordingly measurements should be made on samples using the same metal and provided with a metal layer of substantially the same thickness.

A panel is prepared by autoclave cure that is 300 mm x 300 mm x 3 mm in size. The lay-up of the panel is 0/90. Specimens (typically four) for test are then cut from the panel that are 40 mm x 40 mm. The square faces of the specimens should be sanded (for example on a Linisher machine) to expose the carbon fibres. This is not necessary if peel ply is used during the cure. Excess sanding should be avoided as this will penetrate past the first ply. The square faces are then coated with an electrically conductive metal, a thin (approximately 30 nm) layer of gold via a sputterer (Technique 1) or a 120 micron thick layer of tin-zinc (70:30) applied by arc spraying (Technique 2). Any gold or tin zinc on the sides of the specimens should be removed by sanding prior to testing. The metal coating is required to ensure low contact resistance. The tin-zinc arc spraying technique is preferred as we have found that there is lesson significant variability in the results as opposed to samples which were coated by gold sputtering and tested for conductivity as herein described.

A power source (TTi EL302P programmable 30V/2A power supply unit, Thurlby Thandar Instruments, Cambridge, UK) that is capable of varying both voltage and current is used to determine the resistance. The specimen is contacted with the electrodes (tinned copper braids) of the power source and held in place using a clamp (one must ensure the electrodes do not touch each other or contact other metallic surfaces as this will give a false result). Two or four electrodes per specimen were used, the latter was preferred as it is more reproducible. Ensure the clamp has a non-conductive coating or layer to prevent an electrical path from one braid to the other. A current of one ampere is applied and the voltage noted. Using Ohm's Law resistance can then be calculated (V/I). The test is carried out on each of the cut specimens to give range of values. Each specimen is tested two times. To verify the measurement, the resistivity is also measured using a Flux Multimeter by placing one electrode on one plated surface and the other electrode on the opposite plated surface. From the resistance (R) a conductivity value can be calculated as defined herein before.

### Example 1

A prepreg which contains an uncured thermosetting resin composition and a carbon IM7 fibre of the areal weight 268 g/m² was prepared on an experimental pilot prepreg line. The thermosetting resin contained a blend of trifunctional epoxy resin (from Huntsman), bisphenol-F epoxy, and 44DDS curative. The resin contained a thermoplastic additive in the form of polyethersulphone (PES), which was dissolved in the thermosetting resin. In addition the product contained thermoplastic particles in the form of polyamide PA 6 (nylon 6) in a concentration of 13.5 weight % based on the total weight of the formulated thermosetting resin (which also contains the additive particles). The volume average diameter of the thermoplastic particles was 20 microns as determined by Coulter measurement (laser diffraction analysis). The prepreg was produced in accordance with Process 1 as described hereinbefore. We have observed that the Z-direction electrical conductivity of this material is in the range of 1-6 S/m.

### Example 1a

This product is a prepreg which is identical in composition to Example 1. However, the product is produced by a process that includes two rough spreader bars (RSB) and the step of doubling up of the fibre tows by additional smooth fibre spreading bars (NFS). The rough spreader bars have a surface roughness of 4 microns as opposed to the smooth spreader bars which have a roughness of approximately 0.1 micron. Before the fibre is fed into the impregnation line, the fibre tows run through the spreader bar arrangement which includes the rough spreader bars, in the NFS pattern around the spreader bars forming an undulating surface in the fibre layer. Following fibre spreading, the unidirectional fibre tows are impregnated by two resin films on either side of the fibres as it is fed between nip rollers. The "Z" direction electrical conductivity of this material is in the range of from of 4-15 S/m and the fibres are disrupted as is observed from micrographs of a cured quasi isotropic laminate.

### Example 1b

Prepreg was produced in the same way as in Examples 1, 1a; however this time conductive particles were also added to the prepregs of Examples 1, 1a.

The resulting product contained thermoplastic particles in the form of polyamide 6 (PA 6) in a concentration of 13.5 wt % based on the thermosetting resin. The resin further contained glassy carbon particles (CMS) having a volume average diameter of 15 or 30 microns as determined by Coulter measurement using a Beckman Coulter. The concentration of the particles varied from 1 wt % to 3 wt %.

Carbon microspheres (CMS) were supplied by HTW Hochtemperatur-Werkstoffe of Germany and are called Sigradur G (10-20) that have an average particle size of 15 microns and Sigradur G (20-50) that have an average particle size of 30 microns as determined with a Beckman Coulter.

Conductivity achieved was between 5.0-12.1 S/m at a loading range of 0.5-3.0 weight % in relation to the resin. The results are presented in the below Table 1.

**Table 1**

| **Prepreg system** | **Technique 2 4 point Conductivity S/m** | **Technique 1 2 point Conductivity S/m** |
|---|---|---|
| Disrupted fibres by Process 1 with | 1-6 | 1-6 |
| no conductive particles | | |
| No disrupted fibres with | 5.0 | 3.9 |
| 0.5 % CMS (mean diameter 30 µm) | | |
| No disrupted fibres with | 12.1 | 6.9 |
| 1.0 % CMS (mean diameter 30 µm) | | |
| Disrupted fibres by Process 1 with | 11.4 | 7.5 |
| 1.0 % CMS (mean diameter 15 µm) | | |
| Disrupted fibres by Process 1 with | 5.2 | 3.9 |
| 3.0 % CMS (mean diameter 15 µm) | | |

Although the CMS increased the conductivity over the standard prepreg containing no conductive particles, it was found that its use resulted in scratches on the coating rollers.

### Example 2

The CMS used in Example 1b was replaced with potato shaped graphite (PSG), SG25/99.95 SC, of average particle size 20 µm obtained from NGS Naturgraphit of Germany) with the following results:

**Table2**

| **Prepreg system** | **Technique 2 4 point Conductivity S/m** | **Technique 1** 2 **point Conductivity S/m** |
|---|---|---|
| No disrupted fibres with | 0.5 | 0.4 |
| 1.0 wt % PSG | | |
| Disrupted fibres by Process 1 with | 4.0 | 3.1 |
| 1.0 wt % PSG | | |

The prepregs of Example 2 were all prepared in the same way as in Examples 1,1a.

### Additional Examples

Prepregs (20 m x 0.3 m) with different amounts of conductive particles were manufactured on the pilot prepreg line employed in Example 1,1a,1b by feeding a continuous layer of unidirectional carbon fibres and bringing into contact with two layers of curable resin containing the electrically conductive particles and thermoplastic toughner particles (Rilsan PA 11 or Orgasol PA 6 from Arkema) in a so-called 2 film process.

The potato shaped graphite (PSG) was supplied by NGS Naturgraphit of Germany and are called SG25/99.95 SC and have an average particle size of 20 microns. Another PSG was supplied by Nippon Power Graphite Company of Japan and called GHDR-15-4.

Planar graphites were supplied by Timcal Ltd of Switzerland and are called Timrex SFG44 and Timrex KS44. These particles have an average particle size of 22 microns. Another planar graphite was supplied by Graphit Kropfmuhl of Germany and is called SGA20 M and has an average particle size of 20 microns.

The prepreg was made using IMA carbon fibre at an areal weight of 268 gsm. For resistance panels 12 ply laminates were produced using 0/90 lay-up and cured at 180°C for 2 hours in an autoclave at 3 bar pressure.

Prepregs were made by process 1 or 2. The prepregs made Process 1 were prepared containing the conductive particles wherein the pressure exerted onto the carbon fibres and resin did not exceed 40 kg per centimetre of the width of the carbon fibre layer. In this case, the disruption of the fibres was much less severe when compared to prepreg prepared by the 2 film Nip process of Figure 2 (Process 2). In addition, for comparison, prepregs were made containing no conductive particles but prepared by using rough spreader bars (RSB) on the carbon tows and using Process 2. In addition, for comparison prepregs, made by Process 2 were prepared containing 'planar' conductive particles.

### Example 3

This product is a prepreg produced on a pilot prepreg line containing an uncured thermosetting resin and a carbon fibre IMA. The areal weight of the fibre was 268 g/m². In addition the product contained thermoplastic particles in the form of PA 11 in a concentration of 13.5 wt % based on the thermosetting resin.

### The product was produced by the Process 2

The impregnated fibre was heated to improve the flow of the resin films into the fibres. Subsequently, the impregnated fibre passed through a set of "S wrap rollers" to align the unidirectional fibres and further enhance homogeneity and impregnation of the prepreg material. Subsequently, following heating of the fibres by an IR table to improve resin flow, the material was passed through 3 sets of nip rollers of Figure 2. Finally, the paper backing layers were removed and a polythene backing sheet (polyethylene sheeting) was applied to form the final prepreg product. This is common to all examples employing Process 2.

**Table 3**

| **Prepreg system** | **Technique 2 4 point Conductivity S/m** | **Technique 1 2 point Conductivity S/m** | **Technique 1 4 point Conductivity S/m** |
|---|---|---|---|
| Disruptive fibres by Process 2 with RSB | 4-15 | 1-6 | 6.20 |
| No conductive partilces 13.5 % PA11 | | | |

### Example 4

This product was a prepreg containing an uncured thermosetting resin and a carbon fibre IMA. The areal weight of the fibre is 268 g/m². In addition the product contained thermoplastic particles in the form of PA6 in a concentration of 13.5 wt % based on the thermosetting resin. The prepreg also contained PSG SG25/99.95 SC in a concentration of 1 wt% based on thermosetting resin. This product was produced using the (S-wrap) 2 film process.

**Table 4**

| **Prepreg system** | **Technique 2 4 point Conductivity S/m** | **Technique 1 2 point Conductivity S/m** | **Technique 1 4 point Conductivity S/m** |
|---|---|---|---|
| Disruptive fibres by Process 1 with 1 % PSG and 13.5 % PA6 | 4.4 | 3.1 | 5.0 |

### Example 5-9

These prepregs had an areal weight of the fibre of 268 g/m². These products contained thermoplastic particles in the form of PA11 in a concentration of 9.5 wt % based on the thermosetting resin. The prepreg also contained PSG SG25/99.95 SC in varying concentrations of between 1 to 4 wt% based on thermosetting resin. This product was produced using the (S-wrap) 2 film process of Figure 1.

**Table 5**

| **Example** | **Prepreg system** | **Technique 2 4 point Conductivity S/m** | **Technique 1 2 point Conductivity S/m** | **Technique 1 4 point Conductivity S/m** |
|---|---|---|---|---|
| **5** | Disruptive fibres by Process 1 with 1 % PSG and 9.5 % PA11 | 12.5 | 7.6 | 16 |
| **6** | Disruptive fibres by Process 1 with 2 % PSG and 9.5 % PA11 | 21.8 | 10.5 | 27 |
| **7** | Disruptive fibres by Process 1 with 3 % PSG and 9.5 % PA11 | 28.9 | 14 | 43 |
| **8** | Disruptive fibres by Process 1 with 3 % PSG and 9.5 % PA11 | 26.4 | 13 | 37 |
| **9** | Disruptive fibres by Process 1 with 4 % PSG and 9.5 % PA11 | 26.0 | 13 | 36 |

It is shown in Table 5 that increasing the content of the PSG increases the conductivity of the composite. A maximum conductivity of 29 S/m is achieved at 3 wt% loading of PSG. Increasing the loading of the PSG above 3 wt% does not improve conductivity values further.

### Example 10 to 12

These prepregs were prepared as in Example 3, using a fibre layer of 268 g/m² areal weight
These prepregs contained thermoplastic particles in the form of PA11 having a concentration varying from 9.5 to 13.5 wt % based on the formulated thermosetting resin weight. The prepreg contains PSG SG25/99.95 SC in concentrations of between 3 wt % based on the formulated thermosetting resin weight. This product was produced using the 2 film Nip process.

**Table 6**

| **Example** | **Prepreg system** | **Technique 2 4 point Conductivity S/m** | **Technique 1 2 point Conductivity S/m** | **Technique 1 2 point Conductivity S/m** |
|---|---|---|---|---|
| **10** | Disruptive fibres by Process 2 with 3 % PSG and 9.5 % PA11 | 102 | 26 | 173 |
| **11** | Disruptive fibres by Process 2 with 3 % PSG and 10.5 % PA11 | 87.8 | 20 | 118 |
| **12** | Disruptive fibres by Process 2 with 3 % PSG and 13.5 % PA11 | 51.0 | 20 | 83 |

Table 6 shows by using Process 2 in combination with PSG particles, that conductive values greater than 100 S/m can be achieved. By lowering the thermoplastic particle content conductivity can also be increased.

### Example 13

This prepreg was prepared as for Example 3, using a fibre layer of 268 g/m² areal weight. The product contained thermoplastic particles in the form of PA 6 in a concentration of 10.5 wt % based on the formulated thermosetting resin weight. The prepreg contained PSG SG25/99.95 SC in a concentration of 3 wt % based on the formulated thermosetting resin weight. This product was produced using the 2 film Nip process.

**Table 7**

| **Prepreg system** | **Technique 2 4 point Conductivity S/m** | **Technique 1 2 point Conductivity S/m** | **Technique 1 4 point Conductivity S/m** |
|---|---|---|---|
| Disruptive fibres by Process 2 with 3 % PSG and 10.5 % PA6 | 96.2 | 29 | 150 |

Table 7 shows by the combination of Process 2 with PSG particles can produce a prepreg with conductivity values greater than 90 S/m. This confirms that using a different thermoplastic particle does not significantly affect conductivity values.

### Example 14

This prepreg was prepared as for Example 3, using a fibre of 268 g/m² areal eight . The product contains thermoplastic particles in the form of PA11 in a concentration of 10.5 wt % based on the thermosetting resin. The prepreg contains PSG GHDR-15-4 in a concentration of 3 wt % based on the formulated thermosetting resin weight. This product was produced using the 2 film Nip process.

**Table 8**

| **Prepreg system** | **Technique 2 4 point Conductivity S/m** | **Technique 1 2 point Conductivity S/m** | **Technique 1 4 point Conductivity S/m** |
|---|---|---|---|
| Disruptive fibres by Process 2 with 3 % PSG and 10.5 % PA11 | 116 | 30 | 207 |

Table 8 shows that the combination of Process 2 with PSG GHDR-15-4 particles to the prepreg, conductivity values greater than 100 S/m can be achieved.

### Example 15 to 18

These prepregs were prepared as for Example 3, using a fibre layer of 268 g/m² areal weight
.The product contained thermoplastic particles in the form of PA11 in a concentration of 10.5 wt % based on the formulated thermosetting resin weight. The prepregs contained graphite particles with a planar shape rather than a potato shape, which were applied with a concentration of 3 wt % based on the formulated thermosetting resinweight. These products were produced using the 2 film Nip process.

**Table 9**

| **Comparatve Example** | **Prepreg system** | **Technique 2 4 point Conductivity S/m** | **Technique 1 2 point Conductivity S/m** | **Technique 1 4 point Conductivity S/m** |
|---|---|---|---|---|
| **15** | Disruptive fibres by Process 2 with 3 % GK SGA20 M | 27.3 | 13 | 39 |
| **16** | Disruptive fibres by Process 2 with 3 % Timrex KS44 graphite | 21.3 | 13 | 28 |
| **17** | Disruptive fibres by Process 2 with 3 % Timrex SFG44 graphite | 22.6 | 13 | 31 |
| **18** | Disruptive fibres by Process 2 with 3 % GK SC20 | 36.3 | 18 | 51 |

Table 9 shows by the combination of Process 2 and the addition of planar conductive particles to a prepreg achieves conductivity values of only 36 S/m. This demonstrates that the shape of the particle is important and that spherical or spheroidal particles can result in composites having higher conductivity

### Mechanical Performance

A further 100 metres of prepreg from examples 3, 12 and 15 were produced. Mechanical properties were compared to identical laminates formed without any conductive particles. A cured ply thickness of 0.25 mm was assumed for the 268 gsm fibre areal weight fibres.

**Table10**

| **Test** | **Example 3** | **Example 12** | **Example 15** |
|---|---|---|---|
| 0°-tensile strength MPa (ASTM D3039) | 3014 | 3109 | 3024 |
| 0°-tensile modulus GPa (ASTM D3039) | 188 | 186 | 187 |
| OHT strength (40/40/20) MPa (ASTM D5766) | 776 | 838 | - |
| CAI -30J impact MPa (ASTM D7137) | 313 | 326 | 286 |
| IPS modulus MPa (ASTM D3518) | 4.8 | 5.3 | |
| IPS strength MPa (ASTM D3518) | 102 | 95 | - |
| 4 point conductivity (S/m) | 5-20 | 83 | 207 |

It can be seen that the presence of the electrically conductive carbon particles has little or no effect on mechanical performance whereas the use of the planar particle of Example 15 reduced the impact strength.

### Examples 19 to 24

Prepregs were prepared using layers of fabric having an areal weight of 268 g/m² on a semi commercial prepreg line. The product contained 10.5 wt % to PA 11 and 3 wt % of potato shaped graphites HDR-15-4 and SG 25/99.95 SC. Process 1 and Process 2 were employed and the 4 point conductivity was measured only by Technique 2.

The results were as follows.

**Table11**

| **Example** | **Prepreg system** | **Particle** | **Technique 2 S/m** |
|---|---|---|---|
| **19** | Process 1 No Disruption | HDR 15-4 | 68 |
| **20** | Process 2 No Disruption | HDR 15-4 | 64 |
| **21** | Process 2 Disruption | HDR 15-4 | 50 |
| **22** | Process 1 No Disruption | 25/99.95 SC | 45 |
| **23** | Process 2 No Disruption | 25/99.95 SC | 41 |
| **24** | Process 2 Disruption | 25/99.95 SC | 46 |

The mechanical properties of the examples 19, 20, 22 and 23 were compared with those of composite containing no conductive particles or fibre disruption, and made using either Process 1 or 2 athe results were as follows:

**Table 12**

| **Test** | **Example 19** | **Example 22** | **13.5 wt % PA6 No conductive particles Process 1** |
|---|---|---|---|
| ILS strength MPa (ASTM D2344) | 93 | 94 | 90 |
| IPS strength MPa (ASTM D3518) | 104 | 102 | 104 |
| IPS modulus GPa (ASTM D3518) | 5.23 | 5.36 | 5.4 |
| Fracture Toughness G1c J/m2 (ASTMD5528) | 645 | 580 | 395 |
| CAI (30J) MPa (ASTM D7137) | 317 | 300 | 269 |

| | Example 21 | Example 23 | **13.5 wt % PA6 No conductive particles Process 2** |
|---|---|---|---|
| ILS strength MPa (ASTM D2344) | 93 | 92 | 90 |
| IPS strength MPa (ASTM D3518) | 103 | 103 | 104 |
| IPS modulus GPa (ASTM D3518) | 5.14 | 5.34 | 5.4 |
| Fracture Toughness G1c J/m2 (ASTMD5528) | 598 | 618 | 395 |
| CAI (30J) MPa (ASTM D7137) | 306 | 324 | 269 |

Table 12 demonstrates that mechanical properties are retained and in some instances improved when potato shaped graphite particles are used.

## Claims

1. A prepreg comprising a fibre reinforced curable resin, the prepreg containing an electrically conductive particle in the range of from 0.5 to 10% by weight based on the resin, the electrically conductive particle comprising potato shaped graphite.

2. A prepreg according to Claim 1 containing from 1 to 8% by weight of the potato shaped graphite.

3. A prepreg according to Claim 1 or Claim 2 containing a toughener.

4. A prepreg according to any of the preceding claims containing from 45% to 75% by volume of fibre.

5. A prepreg according to any of the preceding claims in which the fibres are disrupted.

6. The use of a prepreg according to any of the preceding claims for the manufacture of aircraft components.

7. A composite comprising a fibre reinforced resin, the composite being derived from a prepreg according to any of Claims 1 to 5.

8. The use of a composite according to Claim 7 as an aircraft component.

9. The use according to Claim 8 in which the component is at least part of the fuselage.

## Patentansprüche

1. Prepreg, das ein faserverstärktes härtbares Harz umfasst, wobei das Prepreg elektrisch leitfähige Teilchen im Bereich von 0,5 bis 10 Gew.-% bezogen auf das Harz enthält, wobei die elektrisch leitfähigen Teilchen kartoffelförmiges Grafit umfassen.

2. Prepreg nach Anspruch 1, das 1 bis 8 Gew.-% des kartoffelförmigen Graphits enthält.

3. Prepreg nach Anspruch 1 oder Anspruch 2, das ein Verfestigungsmittel enthält.

4. Prepreg nach einem der vorhergehenden Ansprüche, das 45 Vol.-% bis 75 Vol.-% Faser enthält.

5. Prepreg nach einem der vorhergehenden Ansprüche, wobei die Fasern aufgebrochen sind.

6. Verwendung eines Prepregs nach einem der vorhergehenden Ansprüche zur Herstellung von Flugzeugbauteilen.

7. Verbundstoff, der ein faserverstärktes Harz umfasst, wobei der Verbundstoff aus einem Prepreg nach einem der Ansprüche 1 bis 5 erzeugt wird.

8. Verwendung eines Verbundstoffs nach Anspruch 7 als Flugzeugbauteil.

9. Verwendung nach Anspruch 8, wobei das Bauteil mindestens Teil des Rumpfes ist.

## Revendications

1. Préimprégné comprenant une résine durcissable renforcée par une fibre, le préimprégné contenant une particule électriquement conductrice dans la plage de 0,5 à 10 % en poids par rapport à la résine, la particule électriquement conductrice comprenant du graphite de forme patatoïde.

2. Préimprégné selon la revendication 1 contenant de 1 à 8 % en poids du graphite de forme patatoïde.

3. Préimprégné selon la revendication 1 ou la revendication 2 contenant un durcisseur.

4. Préimprégné selon l'une quelconque des revendications précédentes contenant de 45 % à 75 % en volume de fibre.

5. Préimprégné selon l'une quelconque des revendications précédentes dans lequel les fibres sont désorganisées.

6. Utilisation d'un préimprégné selon l'une quelconque des revendications précédentes pour la fabrication d'éléments d'avion.

7. Composite comprenant une résine renforcée par une fibre, le composite étant issu d'un préimprégné selon l'une quelconque des revendications 1 à 5.

8. Utilisation d'un composite selon la revendication 7 en tant qu'élément d'avion.

9. Utilisation selon la revendication 8 dans laquelle l'élément est au moins une partie du fuselage.
